# EUROPEAN PATENT SPECIFICATION

(11) **EP 2 471 695 B1**
(45) Date of publication and mention of the grant of the patent: **05.08.2015**
(21) Application number: 11380067.6
(22) Date of filing: 08.09.2011
(51) Int. Cl.: B62B 7/06, B62B 7/00, B62B 7/14, B62B 9/16, B62B 9/28

(54) **A chassis for two-seat children's pushchairs**
Fahrgestell für einen Doppelsitz-Kinderwagen
Châssis pour poussettes d'enfants tandem

(30) Priority: 03.01.2011 ES 201130002
(43) Date of publication of application: 04.07.2012
(73) Proprietor: Jané S.A., 08184 Palau de Plegamans (Barcelona) (ES)
(72) Inventor: Jane Santamaria, Manuel, 08184 Palau Solita i Plegamans Barcelona (ES)
(74) Representative: Morgades y Manonelles, Juan Antonio

(56) References cited:
- EP-A2- 2 241 492
- WO-A1-2008/040797
- WO-A1-2008/127128
- WO-A1-2010/040644
- ES-U- 1 033 012

## Description

### BACKGROUND TO THE INVENTION

Two-seat children's pushchairs for twins have been known for many years and which present a special chassis for holding the two children. These pushchairs generally comprise two side-by-side seats and, because of the width, they can be difficult to manoeuvre through a normal-size door. Pushchairs are also used in which the seats are arranged one behind the other. In both cases, the seats may be replaced by a car-seat or carry-cot.

All these pushchairs present a larger chassis than an ordinary pushchair and are more complicated to fold and it is difficult to put them into the boot of a standard car.

EP 2 241 492 A2 discloses a chassis according to the preamble of claim 1.

### INVENTION SUMMARY

The objective of this invention is a chassis for two-seat children's pushchairs that have several advantages over those currently known. One of these advantages is that the chassis is the normal type that comprises a seat and the second advantage is that the chassis is prepared for installing a second seat when required.

This enables two children to be placed in the pushchair or only one and install a second seat in the pushchair when required.

These advantages are achieved by a chassis according to claim 1.

Because the seat mounted on the lower supports is very low, wheel protectors are installed on the chassis between the rear wheels to prevent the child accidently touching the wheels.

These and other characteristics are better understood in the following description which, in order to facilitate this understanding, is accompanied by two sheets of drawings that represent a practical embodiment that is cited as a non-limiting example of the scope of this invention.

### DESCRIPTION OF THE DRAWINGS

In the drawings,

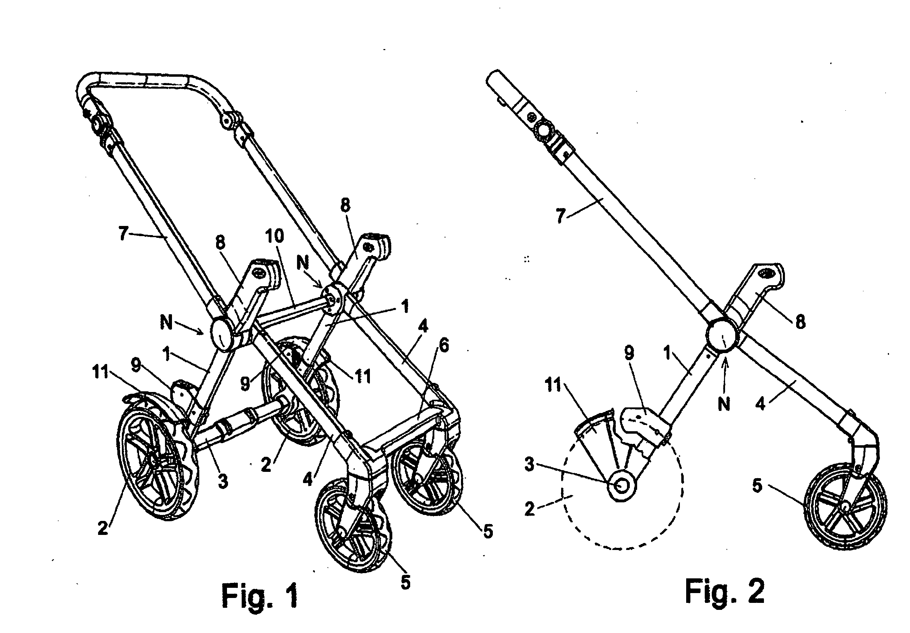

Figures 1 and 2 illustrate the chassis covered by this invention and seen in front perspective and side elevation respectively and
Figures 3 and 4 respectively show this chassis fitted with two seats in front and rear perspectives.

### DETAILED DESCRIPTION

In accordance with the drawings, the chassis for the two-seat children's pushchairs comprises two rear legs (1) with the corresponding wheels (2) that rotate on the transversal axle (3), two front legs (4) with the corresponding wheels (5) and joined together below with a cross member (6) and a handle (7) in an inverted "U" form.

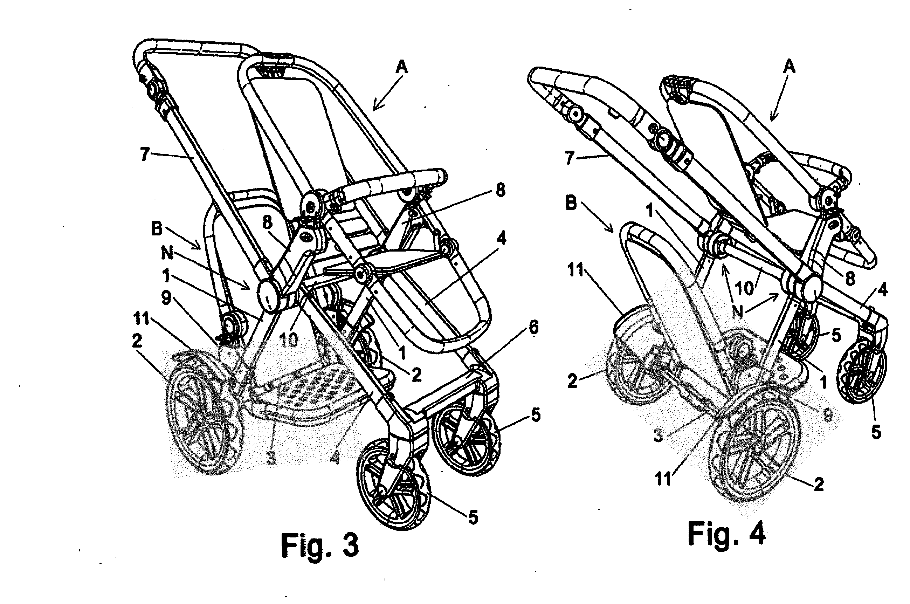

On each side the chassis presents the coupling of two supports (8 and 9) at different heights for separable installation of the two seats (A) and (B) (Figures 3 and 4) using conventional means or those of the applicant firm, with the upper supports (8) in an advanced position inclined forward and coupled to the cores (N), where they are articulately coupled to the handle (7), the front legs (4) and the rear legs (1), with the cores (N) joined together by a transversal shaft (10). The lower supports are fixed to the post-lower part of the rear legs (1).

As shown in Figures 3 and 4, the seat (B), coupled to the lower supports (9), is in a low position between the rear wheels (2). In order to prevent the child's hands coming into accidental contact with said wheels, protectors (11) are installed that are fitted facing the inside faces of the wheels and covering the upper parts.

The embodiment shown in Figures 3 and 4 is arranged so that the upper seat (A) is for a very young child and the lower seat (B) is for an older child, however, it should be taken into account that the supports (8 and 9), according to requirements, can be coupled, for example, to a car-seat, carry-cot or any other type of seat depending on the child's age.

As is logical, the represented seats are complete with upholstered elements and whatever accessories are considered necessary, for example, hoods.

The invention, within its essential character, may be put into practice in other embodiment forms that only differ in certain details from that indicated solely as an example and which similarly attain the claimed protection. This chassis for two-seat children's pushchairs may be manufactured in any form and size with the most suitable means and materials and with the most suitable accessories, with the component elements being replaced by their technical equivalents as long as within the scope of the claims.

## Claims

1. Chassis for a two-seat children's pushchair comprising:
- front (4) legs and rear (1) legs with the corresponding wheels (5, 2)
- a handle (7) in an inverted "U" form
- two supports (8, 9) coupled at different heights to each one of the two sides of the chassis for separable installation of the two seats (A, B), the upper support (8) being in a forward position and the lower support (9) being in a rear position
**characterized in that**
- on each side the upper support (8) is coupled in an inclined manner towards the front in a core (N) where the handle (7), the front (4) legs and rear (1) legs are articulately coupled, **in that**
- both cores (N) are joined together by a transversal shaft (10) and **in that**
- the lower supports (9) are fixed to the post-lower part of the rear legs (1)

2. A chassis for a two-seat children's pushchair in accordance with claim 1, **characterized in that** it comprises rear wheel protectors.

## Patentansprüche

1. Rahmen für einen zweisitzigen Kinderwagen, bestehend aus:
- Vorderschenkeln (4) und Hinterschenkeln (1) mit den entsprechenden Rädern (5, 2),
- einem Lenker (7) in umgekehrter U-Form und
- zwei Stützen (8, 9), die zum Zwecke der trennbaren Montage der beiden Sitze (A, B) in unterschiedlicher Höhe an beiden Seiten des Rahmens verbunden sind, wobei sich die obere Stütze (8) in einer vorderen Position und die untere Stütze (9) in einer hinteren Position befindet.
**Dadurch gekennzeichnet,**
- **dass** die obere Stütze (8) auf jeder Seite schräg nach vorn in einem Mittelstück (N), in welchem der Lenker (7), die Vorderschenkel (4) und die Hinterschenkel (1) gelenkig verbunden sind, angebracht ist;
- **dass** beide Mittelstücke (N) durch eine Querwelle (10) miteinander verbunden sind und
- **dass** die unteren Stützen (9) am hinteren unteren Teil der Hinterschenkel (1) befestigt sind.

2. Rahmen für einen zweisitzigen Kinderwagen nach Anspruch 1, **dadurch gekennzeichnet, dass** er Schutzvorrichtungen an den Hinterrädern umfasst.

## Revendications

1. Châssis pour poussette à deux sièges comprenant :
- des pieds avant (4) et des pieds arrière (1) avec les roues correspondantes (5, 2)
- une poignée (7) en forme de U inversé
- deux supports (8, 9) accouplés à des hauteurs différentes à chacun des deux côtés du châssis pour une installation séparable des deux sièges (A, B), le support supérieur (8) étant dans une position vers l'avant et le support inférieur (9) étant dans un position arrière.
**caractérisé en ce que**
- de chaque côté, le support supérieur (8) est accouplé de manière inclinée vers l'avant à un noyau (N) où la poignée (7), les pieds avant (4) et les pieds arrière (1) sont accouplés de manière articulée, **en ce que**
- les deux noyaux (N) sont reliés entre eux par une tige transversale (10) et **en ce que**
- les supports inférieurs (9) sont fixés à la partie arrière-inférieure des pieds arrière (1)

2. Un châssis pour poussette à deux sièges conformément à la revendication 1, **caractérisé en ce qu'**il comprend de protecteurs de la roue arrière.
